# EUROPEAN PATENT SPECIFICATION

(11) **EP 3 203 851 B1**
(45) Date of publication and mention of the grant of the patent: **03.01.2024**
(21) Application number: 15778656.7
(22) Date of filing: 09.10.2015
(51) Int. Cl.: A23B 4/00, A22C 7/00

(54) **PROCESSING OF PRE-RIGOR MEAT MUSCLES**
BEHANDLUNG VON FLEISCHMUKELN VOR DER TOTENSTARRE
TRAITEMENT DE VIANDE MUSCULAIRE AVANT LA RIGIDITÉ CADAVERIQUE

(30) Priority: 09.10.2014 IE 20140251
(43) Date of publication of application: 16.08.2017
(73) Proprietor: Devrone Unlimited Company, Ardee, County Louth (IE)
(72) Inventor: MCDONNELL, Declan Arthur, County Louth (IE)
(74) Representative: Weldon O'Brien Ltd.
(86) International application number: PCT/EP2015/073448
(87) International publication number: WO 2016/055638

(56) References cited:
- CA-A1- 2 636 443
- CA-A1- 2 884 074
- DE-A1- 3 729 478
- DE-A1-102013 014 727
- DE-U1- 8 624 238
- GB-A- 190 612 836
- US-A- 4 534 286
- US-A- 6 110 034
- US-A1- 2006 147 588

## Description

### Introduction

This invention relates to meat processing.

Beef muscles, fats and bones are located on a beef half-carcass and are chilled together in circulating air at a low temperature (typically 0°C to 2°C) for a period of time (for example 48hrs). During this period, the muscles are lowered in temperature, pH and enter into rigor mortis. In rigor mortis, the muscle shortens, toughens and becomes rigid in shape and structure.

US2,779,681 describes a complex sequence of operations on post-rigor meat which involves searing, seasoning, parchment wrapping, vacuum packing, moulding and cooking to achieve a desired shape.

GB2135648A describes vacuum packing of post-rigor meat such as ham and pressing the meat into shape under vacuum in a cook-in bag lined cooking mould.

EP2055651A describes freezing, conditioning and mechanical pressing of post-rigor meat.

US5,164,21 1 describes an expandable bone plastic cap for covering exposed bone portions of post-rigor bone-in meat cuts.

US20060147588A describes a method and an apparatus for shaping meat portions.

US4,534,286 describes a ham mould closing apparatus.

GB12836 describes a method for preservation and transport of food by placing food in a receptacle, sterilising and refrigerating.

Typical methods used to improve beef tenderness involving suspension from the hip bone tends to compress and toughen certain muscles.

The process of chilling the muscle/fat/bone surface interface creates a temperature gradient between the air and the meat (e.g. 2°C air v 24°C meat surface). This differential induces a differential vapour pressure at the surface which causes some meat moisture to evaporate under reduced partial pressure conditions.

### Statements of Invention

According to the invention there is provided a method of processing meat as defined in claim 1.

Generally the anatomical meat muscle is removed between 30 and 90 minutes post exsanguination.

The carcass is preferably a meat carcass such as beef, pork, lamb, deer, buffalo, or horse. Most preferably the carcass is a red meat carcass, especially beef. It is particularly preferred that the carcass is one that is split along the back bone as this facilitates muscle removal with minimal impact on underlying meat which can be removed in subsequent butchery processes.

The reduced temperature is preferably about 0°C which is maintained for the further period of from 36 to 96 hours, typically about 38 hours.

In one embodiment the conditioning is carried out at least partially in the dark.

In one case the muscle is removed from the carcass in an upward motion.

The method of the invention may comprise the step of spraying the removed muscle with a mist of water prior to vacuum packaging.

In one embodiment the moulding step comprises applying a high force to the vacuum packed meat muscle to mould the meat into a defined shape. The moulding force may be applied by a mechanical pressing machine. The moulding pressure applied may be from 10 to 15 barg (11 to 16 bar), preferably about 12 barg (13 bar).

The mould may comprise a movable portion to apply a force to the vacuum packed muscle located in the mould. This force is not spring biased but totally rigid and hence is mounted at maximum pressure as the meat seeks to contract during rigor development and exerts an upward force on the mould lid. Hence, muscle contraction is avoided and shape is maintained.

We also describe a meat muscle pressing device comprising:-
a base mould part for receiving an individual anatomical meat muscle;
a lid mould part for the base;
a frame for the lid mould part, the frame being adapted for directing pressure from a pressure applying device to the lid mould part;
an automatic clamp for clamping the lid to the base to maintain pressure on the anatomical meat muscle when the pressure applying device is in the release configuration.

In one example of the disclosure the automatic clamp comprises a ratchet and a pawl mechanism between the frame of the lid mould part and the base mould part.

In one case the base mould part comprises opposite ends and sides extending between the opposite ends and wherein the frame of the lid mould part comprises opposite ends and sides extending between the opposite ends, one of the ratchet or pawl being provided at the ends of base mould part and the other of the ratchet and pawl being provided at the ends of the frame of the lid mould part.

In one example of the disclosure the pawls are on the base mould part ends and the ratchets are on the ends of the frame of the lid mould part.

In one example of the disclosure the lid mould part frame comprises ratchet members which are hingedly mounted for movement from an engaged configuration in which the pawl of the base mould part is engaged to a release configuration which the pawl of the base mould part is disengaged from the ratchet.

Preferably the ratchet members are biased into the engaged configuration.

In one case the lid mould part frame comprises a beam extending parallel to and spaced-apart from the lid mould part, strut members extending between the beam and the lid mould part, the ratchet members being hingedly mounted to opposite ends of the beam and extending towards the base mould part.

In one example of the disclosure the profile of a meat muscle engaging surface of the base mould part in transverse cross section is curvilinear. The profile of the meat muscle engaging surface of the base mould part in transverse cross section may be semi-circular.

In one example of the disclosure the profile of the meat muscle engaging surface of the lid mould part in transverse cross section is curvilinear. The profile of the meat muscle engaging surface of the lid mould part in transverse cross section may be semi-circular.

In one case the base mould part and the lid mould part are shaped for pressing an individual anatomical muscle into a substantially cylindrical shape. The individual meat muscle may, for example, be psoas major.

We also describe a meat muscle pressing system comprising a pressing device of the invention and a pressure applying device having an active configuration for applying pressure to the lid mould part and a release configuration.

### Brief Description of Drawings

The invention will be more clearly understood from the following description thereof given by way of example only with reference to the accompanying drawings, in which:

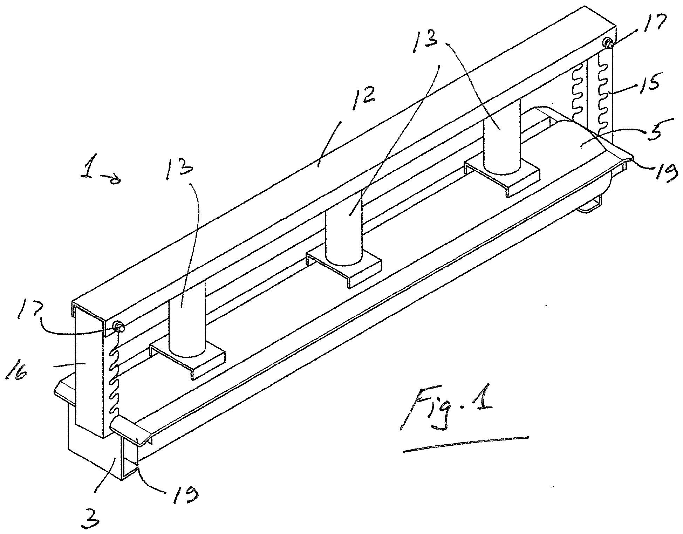

Fig. 1 is an isometric view of a meat muscle pressing machine;

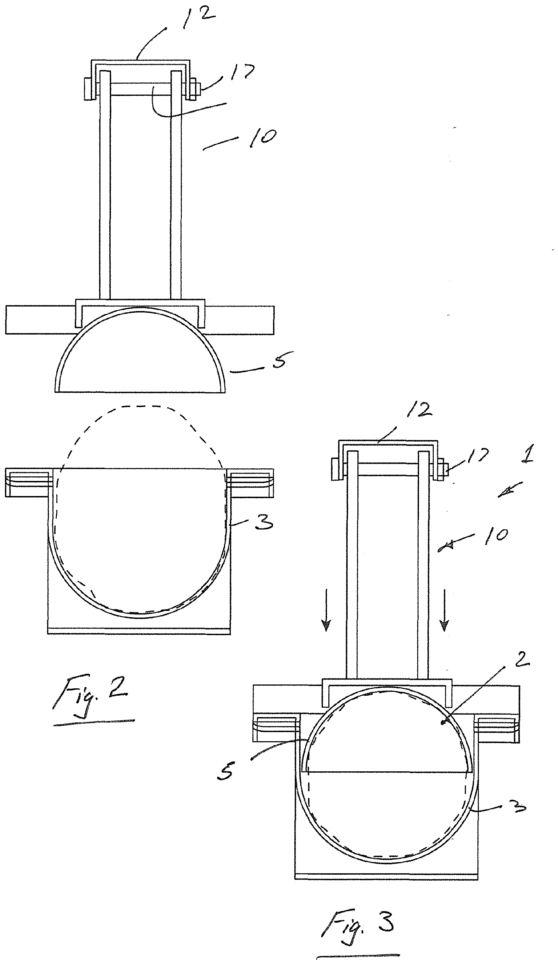

Figs. 2 and 3 are cross sectional views of the pressing machine in release and engaged configuration;
Fig. 4 and 5 are side views of the pressing machine in different configurations;
Fig. 6 is a cross sectional view of the pressing machine with a meat muscle in place;
Figs. 7(a) and 7(b) illustrate the operation of a clamping mechanism of the pressing machine;
Figs. 8 to 11 are side views illustrating the operation of the pressing machine and associated press;
Figs. 12(a) to 12(e) show various stages in processing an anatomical meat muscle according to the method of the invention; and

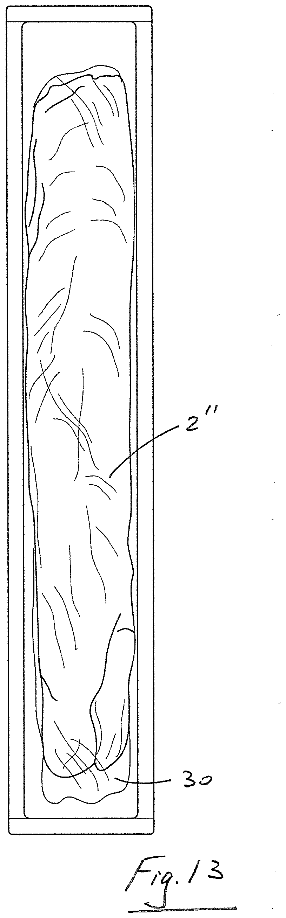

Fig. 13 is a plan view of an anatomical meat muscle after pressing in the mould.

### Detailed Description

The invention will be more clearly understood from the following description of an embodiment thereof, given by way of example only.

Selected beef individual anatomical muscles (for example psoas major) are removed from a beef carcass pre-rigor within 30 to 90 minutes post exsanguination using a technique to maximise muscle removal. The muscle is removed in stages with the muscle being removed in an upward motion as opposed to a conventional downward technique. These individual muscles are selected because they contain a high proportion of lean tissue (rather than fat and bone), their removal does not expose other muscles to dehydration behind them and they are compressed (toughened) by normal chilling protocols.

The muscles are recorded, weighed and linked to the remainder of the carcass. The tissue is then trimmed in its pre-rigor state, vacuum packed (2 to 4mbara (2 to 4 mbar)) in a high oxygen barrier multi-layered pouch (less than 20cc O₂/sqm/24hrs/1bar, 23°C,). A controlled sequence of vacuum production with respect to time is used to avoid the release of steam vapour from the muscle. One such sequence is:-
1000mbara to 500mbara (1000mbar to 500mbar) in 10secs
500mbara to 100 mbara (500mbar to 100mbar) in 7 secs
100mbara to 2mbara (100mbar to 2mbar) in 5 secs

The bags are sized to prevent incorrect vacuum packing due to the release of steam vapour from the cuts under vacuum due to their high temperature. In addition, muscles can be sprayed with a mist of water particles to compensate for vacuum dehydration. Prompt packing of pre-rigor muscles eliminates desiccation and weight loss resulting in improved product colour. Muscles are moulded into shape using a polymer template or mechanical mould of defined construction and shape. Moulds may be pressed into the closed position using a mechanical pressing machine. In some cases the mould may only engage a portion of the surface of the vacuum pack muscle. For example, the mould may be of a curved shape (such as hemispherical) to engage a lower portion of the vacuum packed muscle only. No additional force other than the muscle's own weight is applied to the rest of the muscle. This arrangement has merit in that it achieves improved fillet shape while reducing any excessive drip due to moulding pressure. It also allows better chilling as cold air can still contact 50% of the muscle area not insulated by the mould.

The moulding pressure applied may be from 10 to 15 barg (11 to 16 bar), preferably about 12 barg (13 bar).

Referring to the drawings there is illustrated a meat muscle pressing device 1 which comprises a base mould part 3 for receiving an individual anatomical muscle 2 and a lid mould part 5. The lid mould part 5 has a frame 10 comprising a beam 12 which is spaced-apart from and extends parallel to the lid mould part 5 and strut members 13 (which may be hollow) extending between the beam 12 and the lid mould part 5. End members 15, 16 are hingedly mounted by hinge pins 17 at the opposite ends of the beam 12. It will be noted that the end members 15, 16 each have a plurality of spaced-apart grooves 18 as will be described in more detail below.

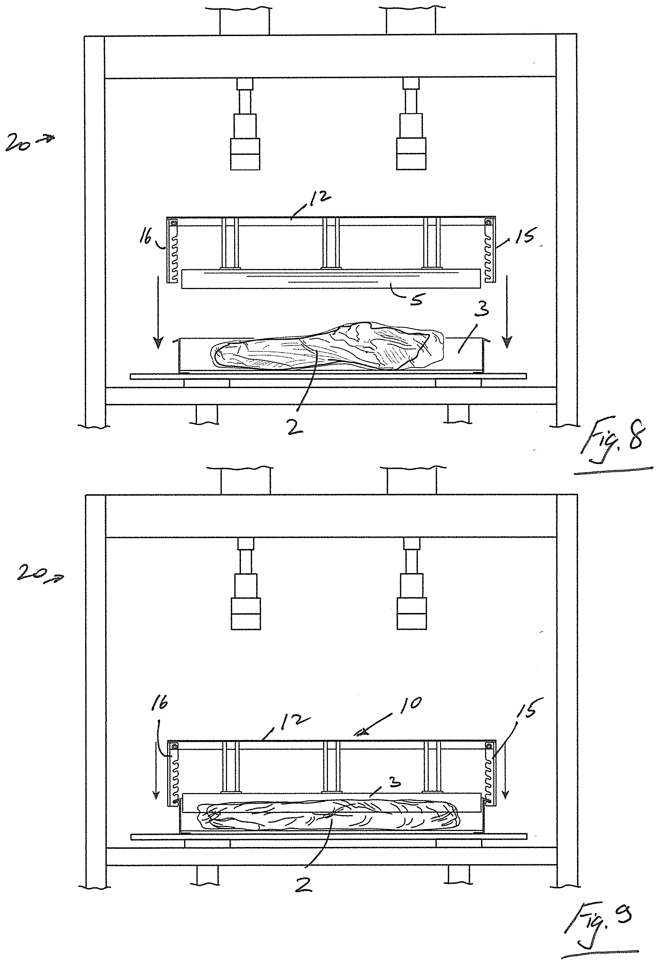

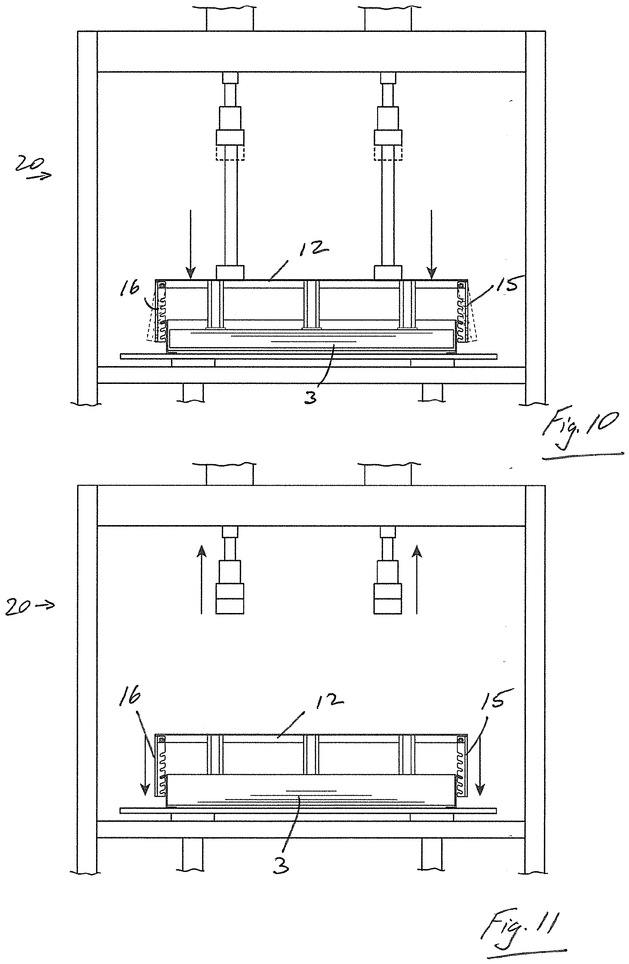

The frame 10 of the lid mould part 5 is adapted for transferring/directing pressure from a pressure applying device such as a ram press machine 20 (Figs. 8 to 11) to the lid mould part 5.

The base mould part 3 comprises opposite ends and sides extending between the opposite ends. Each of the ends of the base mould part 3 comprises a projection or lip 19 which is shaped for engagement in the grooves 18 of the lid frame end members 15, 16.

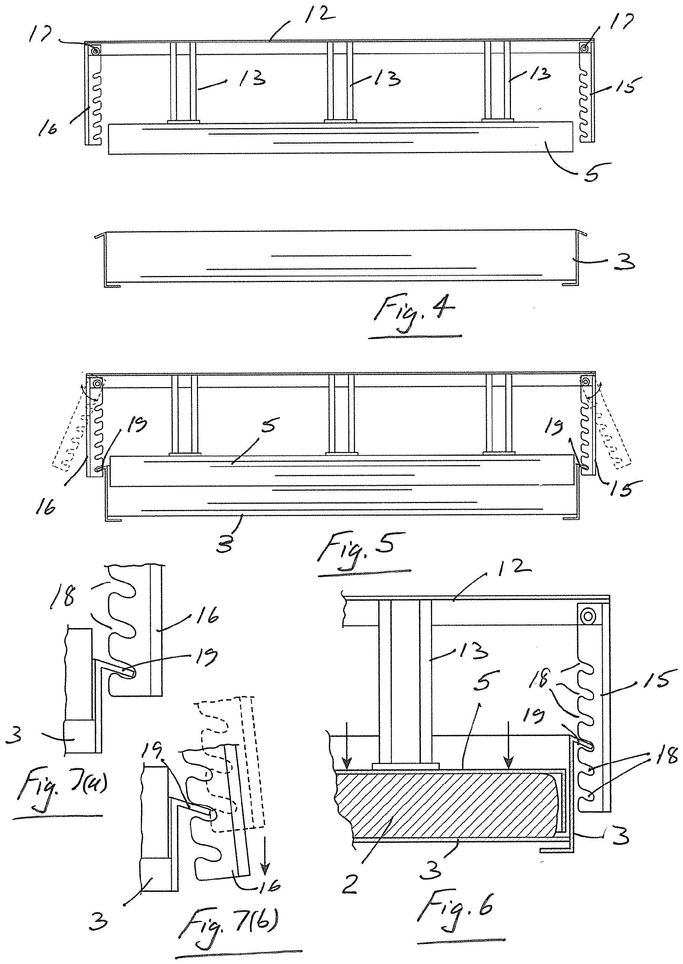

The lid end frame members 15, 16 are hinged for movement between an engaged configuration in which the projections 19 of the base mould part 5 are engaged in a groove 18 of the frame members 15, 16 and a disengaged configuration which is illustrated by interrupted lines in Figs. 5 and 7(b). The frame members 15, 16 are biased into the engaged configuration by any suitable biasing means such as a spring.

The frame members 15, 16 of the frame 10 of the lid mould part and the projections 19 of the base mould part function somewhat in the manner of a ratchet 15, 16 and pawl 19.

The ratchet and pawl mechanism automatically clamps the lid 5 to the base 3 and maintains pressure on the individual anatomical meat muscle 2 when the pressure applying device 20 is released.

In use, an individual pre-rigor meat muscle 2 such as psoas major is first vacuum packed in a sleeve 30 to avoid the release of steam vapour from the muscle. The muscle is initially generally irregular in shape. The vacuum packed muscle is placed in the base mould part 3 and the lid mould part 5 is placed over it without applying significant pressure to the muscle. This configuration is illustrated in Figs. 5 and 7(a). The assembled mould with the muscle in situ is placed on the bed of the ram press machine 20. When the press machine is activated, the rams apply a pre-defined pressure to the frame 10 of the lid mould part 5 which travels downwardly to apply pressure to the meat muscle 2 in the mould. As the frame 10 travels down the projections/pawls 19 disengages from the groove 18 in the frame member/ratchet 15, 16. The ratchets 15, 16 pivot outwardly allowing the lid frame part to move down and apply pressure to the meat muscle 2. After a predetermined time, the rams are released and no longer apply pressure to the lid frame. However, the projections/pawls 19 will automatically travel into and be retained in a groove 18 in the members 15, 16 clamping the lid 5 to the base 3 and maintaining pressure on the meat muscle.

The process is highly efficient as the press machine is only required to be applied for a short time after which the pressure is automatically maintained by the mechanical clamping of the lid 5 to the base 3. This clamping force is released by manually disengaging the members 15, 16 from the projections 19.

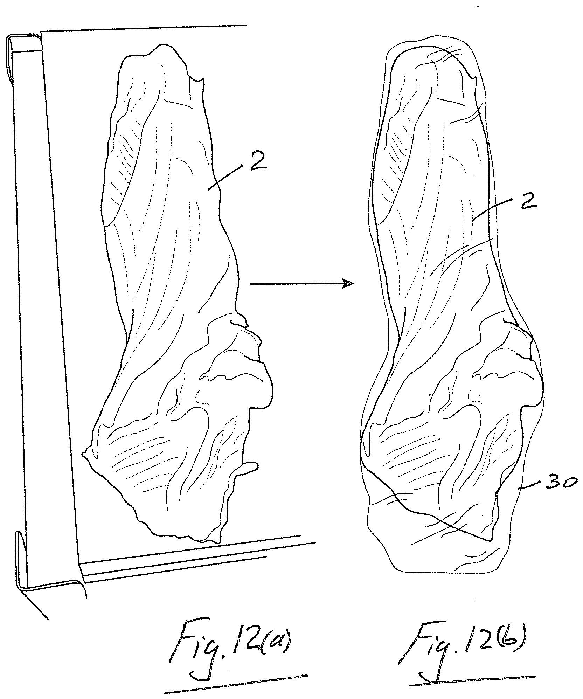

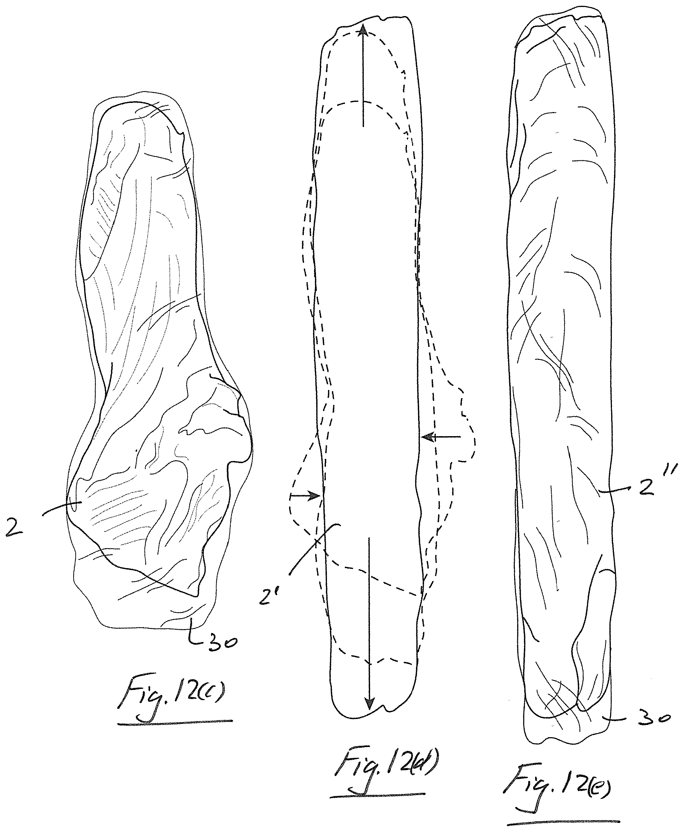

Figs 12(c) to 12(e) in particular illustrate the effect of the pressure being applied to an irregular shaped muscle.

The internal surfaces of the base mould part 3 and the upper lid mould part 5 may be sized and shaped as required to achieve a desired finished product shape.

In the case illustrated in the drawings both the lid 5 and base 3 are curvilinear, in this case semi-circular in cross section so that the finished muscle shape is substantially cylindrical. In addition to improving the quality of the meat, such as shape is particularly suitable to achieve the maximum yield from the muscle when it is cut, for example, into circular shaped steaks.

The moulded vacuum packed meat muscles are then conditioned in defined conditions of time, temperature, air speed and light conditions so as to optimise muscle quality parameters including:
i. Proteolytic enzyme activity
ii. Myofibrillar contraction
iii. Myofibrillar stretching
iv. Muscle isometric tension release
v. Colour stability
vi. Microbiological integrity
vii. Shape
viii. Exudate

Typical conditioning parameters are:
- Air temp: 10°C for 10hrs, then 0°C for 38 to 96hrs
- Air speed: 1 to 3 m/s
- Light: darkness when not being loaded.

The method of the invention produces muscles such as psoas major with at least some of the following improvements:
i. Fresh red appearance with no removal of dark trim due to dehydration
ii. Improved tenderness
iii. Improved shape
iv. Improved yield of saleable meat due to reduced product evaporation during chilling in air
v. Improved yield of saleable steaks due to defined muscle shape
vi. More consistent shape dimensions due to defined muscle shape
vii. Reduced exudate loss during vacuum pact storage
viii. Reduced incidence of aerobic spoilage bacteria due to the prompt storage of cuts in vacuum (anoxic) conditions soon after slaughter.

In some embodiments pre-rigor meat is packed into a non-barrier pouch (e.g. PE, PET, PP, PVC and the like) for subsequent freezing and storage at temperatures below 0°C. All other steps are as described above.

The invention is not limited to the embodiments hereinbefore described which may be varied in detail within the scope of the claims.

## Claims

1. A method of processing meat comprising the steps of:
removing an individual anatomical meat muscle (2) from a carcass within 90 minutes post exsanguination;
vacuum packing the removed individual muscle (2) prior to onset of rigor mortis; and
moulding the vacuum packed individual muscle (2) in a mould (3) into a defined shape;
**characterised in that**,
the vacuum packing is carried out in a manner that substantially avoids release of steam vapour from the muscle and **in that**
the method comprises conditioning the moulded vacuum packed individual muscle (2) in the mould (3) by circulating air around the moulded vacuum packed individual muscle (2) until rigor mortis is complete, in which the air is circulated at a speed of from 1 to 3 metres per second and is maintained at an air temperature in the range of 0°C to 15°C for an initial period of from 8 to 12 hours and at a reduced temperature for a further period.

2. A method as claimed in claim 1, wherein the air temperature is maintained at about 10°C for the initial period, the initial period may be about 10 hours.

3. A method as claimed in claim 1 or 2, wherein the reduced temperature is about 0°C which is maintained for the further period of from 36 to 96 hours, the further period may be about 38 hours.

4. A method as claimed in any of claims 1 to 3, wherein the conditioning is carried out at least partially in the dark.

5. A method as claimed in any of claims 1 to 4, comprising the step of spraying the removed muscle (2) with a mist of water prior to vacuum packaging.

6. A method as claimed in any of claims 1 to 5, comprising the step of packing the individual muscle (2) in a non barrier pouch (e.g. PE, PET, PP, PVC and the like) and subsequently freezing and storing the packaged individual muscle at a temperature below 0°C.

7. A method as claimed in any of claims 1 to 6, wherein the moulding step comprises applying a force to the vacuum packed meat muscle (2) to mould the meat into a defined shape.

8. A method as claimed in claim 7, wherein the moulding pressure applied is from 1.1 to 1.6 MPa (10 to 15 barg; 11 to 16 bar), the moulding pressure may be about 1.3 MPa (12 barg; 13 bar).

9. A method as claimed in claim 7 or 8, wherein the moulding force is applied by a mechanical pressing machine (3, 5).

10. A method as claimed in any of claims 7 to 9, wherein the mould comprises a moveable portion (5) which is biased to apply a force to the vacuum packed muscle (2) located in the mould (3).

11. A method as claimed in any of claims 1 to 10, wherein during the moulding step only a portion of the surface of the vacuum packed muscle (2) is engaged.

12. A method as claimed in any of claims 1 to 11 wherein the carcass is a beef carcass.

13. A method as claimed in any preceding claim, wherein a controlled sequence of vacuum production with respect to time is used to avoid the release of steam vapour from the muscle.

14. A method as claimed in claim 13, wherein said controlled sequence comprises:
1000mbar to 500mbar in 10secs,
500mbar to 100mbar in 7 secs, and
100mbar to 2mbar in 5 secs.

## Patentansprüche

1. Verfahren zum Verarbeiten von Fleisch, das folgende Schritte umfasst:
Entnehmen eines einzelnen anatomischen Fleischmuskels (2) aus einem Schlachtkörper innerhalb von 90 Minuten nach dem Ausbluten;
Vakuumverpacken des entnommenen einzelnen Muskels (2) vor dem Einsetzen der Totenstarre; und
Formen des vakuumverpackten einzelnen Muskels (2) in einem Formwerkzeug (3) zu einer definierten Gestalt;
**dadurch gekennzeichnet, dass**
das Vakuumverpacken auf eine Weise ausgeführt wird, die das Freisetzen von Wasserdampf aus dem Muskel im Wesentlichen vermeidet, und dadurch, dass
das Verfahren das Konditionieren des geformten vakuumverpackten einzelnen Muskels (2) in dem Formwerkzeug (3) durch Umwälzen von Luft um den geformten vakuumverpackten einzelnen Muskel (2), bis die Totenstarre komplett ist, umfasst, wobei die Luft mit einer Geschwindigkeit von 1 bis 3 Metern pro Sekunde umgewälzt wird und während eines Anfangszeitraums von 8 bis 12 Stunden auf einer Lufttemperatur im Bereich von 0 °C bis 15 °C und während eines weiteren Zeitraums auf einer reduzierten Temperatur gehalten wird.

2. Verfahren nach Anspruch 1, wobei die Lufttemperatur während des Anfangszeitraums auf etwa 10 °C gehalten wird, wobei der Anfangszeitraum etwa 10 Stunden betragen kann.

3. Verfahren nach Anspruch 1 oder 2, wobei die reduzierte Temperatur etwa 0 °C beträgt, was während des weiteren Zeitraums von 36 bis 96 Stunden aufrechterhalten wird, wobei der weitere Zeitraum etwa 38 Stunden betragen kann.

4. Verfahren nach einem der Ansprüche 1 bis 3, wobei das Konditionieren mindestens teilweise im Dunkeln ausgeführt wird.

5. Verfahren nach einem der Ansprüche 1 bis 4, umfassend den Schritt des Sprühens des entnommenen Muskels (2) mit einem Wassernebel vor dem Vakuumverpacken.

6. Verfahren nach einem der Ansprüche 1 bis 5, umfassend den Schritt des Verpackens des einzelnen Muskels (2) in einem Beutel ohne Sperrschicht (z. B. PE, PET, PP, PVC und dergleichen) und des anschließenden Einfrierens und Lagerns des verpackten einzelnen Muskels bei einer Temperatur unter 0 °C.

7. Verfahren nach einem der Ansprüche 1 bis 6, wobei der Formungsschritt das Ausüben einer Kraft auf den vakuumverpackten Fleischmuskel (2) umfasst, um das Fleisch zu einer definierten Gestalt zu formen.

8. Verfahren nach Anspruch 7, wobei der ausgeübte Formungsdruck von 1,1 bis 1,6 MPa (10 bis 15 barg; 11 bis 16 bar) beträgt, wobei der Formungsdruck etwa 1,3 MPa (12 barg; 13 bar) betragen kann.

9. Verfahren nach Anspruch 7 oder 8, wobei die Formungskraft durch eine mechanische Pressmaschine (3, 5) ausgeübt wird.

10. Verfahren nach einem der Ansprüche 7 bis 9, wobei das Formwerkzeug einen beweglichen Abschnitt (5) umfasst, der vorbelastet ist, um eine Kraft auf den in dem Formwerkzeug (3) befindlichen vakuumverpackten Muskel (2) auszuüben.

11. Verfahren nach einem der Ansprüche 1 bis 10, wobei sich während des Formungsschritts nur ein Abschnitt der Oberfläche des vakuumverpackten Muskels (2) im Eingriff befindet.

12. Verfahren nach einem der Ansprüche 1 bis 11, wobei es sich bei dem Schlachtkörper um einen Schlachtkörper vom Rind handelt.

13. Verfahren nach einem der vorangehenden Ansprüche, wobei eine kontrollierte Abfolge der Unterdruckerzeugung in Bezug auf die Zeit verwendet wird, um das Freisetzen von Wasserdampf aus dem Muskel zu vermeiden.

14. Verfahren nach Anspruch 13, wobei die kontrollierte Abfolge Folgendes umfasst:
1000 mbar bis 500 mbar in 10 s,
500 mbar bis 100 mbar in 7 s und
100 mbar bis 2 mbar in 5 s.

## Revendications

1. Procédé de transformation de la viande comprenant les étapes consistant à :
retirer un muscle (2) de viande anatomique individuel d'une carcasse dans les 90 minutes suivant une exsanguination ;
emballer sous vide le muscle (2) individuel retiré avant le début de la rigidité cadavérique ;
et
mouler le muscle (2) individuel emballé sous vide dans un moule (3) en une forme définie ;
**caractérisé en ce que**,
l'emballage sous vide est réalisé d'une manière qui évite sensiblement la libération de vapeur du muscle et **en ce que**
le procédé comprend un conditionnement du muscle (2) individuel emballé sous vide moulé dans le moule (3) par mise en circulation d'air autour du muscle (2) individuel emballé sous vide moulé jusqu'à ce que la rigidité cadavérique soit atteinte, dans lequel l'air est circulé à une vitesse allant de 1 à 3 mètres par seconde et est maintenu à une température d'air dans la plage de 0 °C à 15 °C pour une période initiale allant de 8 à 12 heures et à une température réduite pour une période supplémentaire.

2. Procédé selon la revendication 1, dans lequel la température d'air est maintenue à environ 10 °C pour la période initiale, la période initiale peut être d'environ 10 heures.

3. Procédé selon la revendication 1 ou 2, dans lequel la température réduite est d'environ 0 °C qui est maintenue pendant la période supplémentaire allant de 36 à 96 heures, la période supplémentaire peut être d'environ 38 heures.

4. Procédé selon l'une quelconque des revendications 1 à 3, dans lequel le conditionnement est réalisé au moins partiellement dans le noir.

5. Procédé selon l'une quelconque des revendications 1 à 4, comprenant l'étape de pulvérisation du muscle (2) retiré avec une brume d'eau avant l'empaquetage sous vide.

6. Procédé selon l'une quelconque des revendications 1 à 5, comprenant l'étape d'emballage du muscle (2) individuel dans une poche de type non-barrière (par ex., de PE, PET, PP, PVC, et analogues) puis une congélation subséquente et un stockage du muscle individuel empaqueté à une température inférieure à 0 °C.

7. Procédé selon l'une quelconque des revendications 1 à 6, dans lequel l'étape de moulage comprend une application d'une force au muscle (2) de viande emballé sous vide pour mouler la viande en une forme définie.

8. Procédé selon la revendication 7, dans lequel la pression de moulage appliquée va de 1,1 à 1,6 MPa (10 à 15 barg ; 11 à 16 bar), la pression de moulage peut être d'environ 1,3 MPa (12 barg ; 13 bar).

9. Procédé selon la revendication 7 ou 8, dans lequel la force de moulage est appliquée par une machine de pressage mécanique (3, 5).

10. Procédé selon l'une quelconque des revendications 7 à 9, dans lequel le moule comprend une partie mobile (5) qui est contrainte pour appliquer une force au muscle (2) emballé sous vide situé dans le moule (3).

11. Procédé selon l'une quelconque des revendications 1 à 10, dans lequel pendant l'étape de moulage seule une partie de la surface du muscle (2) emballé sous vide est en prise.

12. Procédé selon l'une quelconque des revendications 1 à 11 dans lequel la carcasse est une carcasse de bœuf.

13. Procédé selon une quelconque revendication précédente, dans lequel une séquence commandée de production sous vide en fonction du temps est utilisée pour éviter la libération de vapeur du muscle.

14. Procédé selon la revendication 13, dans lequel ladite séquence commandée comprend :
1 000 mbar à 500 mbar en 10 secondes,
500 mbar à 100 mbar en 7 secondes, et
100 mbar à 2 mbar en 5 secondes.
